Europäisches Patentamt

**European Patent Office**

**Office européen des brevets**

(19)

(11) Publication number: **0 230 710**

**A1**

(12) **EUROPEAN PATENT APPLICATION**

(21) Application number: **86305544.8**

(22) Date of filing: **18.07.86**

(51) Int. Cl.³: **B 26 F 3/00**

(30) Priority: **26.12.85 US 813436**

(43) Date of publication of application:
**05.08.87 Bulletin 87/32**

(84) Designated Contracting States:
**AT BE CH DE FR GB IT LI LU NL SE**

(71) Applicant: **FLOW SYSTEMS, INC.**
**21440 - 68th Avenue South**
**Kent, WA 98032(US)**

(72) Inventor: **Bloomquist, Larry**
**15521 S.W. 183rd Drive**
**Renton Washington 98032(US)**

(74) Representative: **Godsill, John Kenneth et al,**
**Haseltine Lake & Co. Hazlitt House 28 Southampton**
**Buildings Chancery Lane**
**London WC2A 1AT(GB)**

(54) Alignment method and apparatus for fluid jet cutting system, and a cutting system.

(57) A fluid jet cutting system is described having a nozzle (12) through which a fluid jet is directed for cutting a workpiece (15). The workpiece (15) is supported using pins (17) each of which is provided with an alignment device in the form of a generally tubular body (104) provided with a through hole (106). The relative positions of the nozzle and workpiece (15) can be adjusted until the fluid jet passes through the through hole (106) with minimum disturbance.

In alternative embodiments, the alignment device may be provided by a cap permanently affixed in an alignment plate, or it may be constituted by the pin (17) itself.

The alignment system provides a simple method for visually verifying the jet alignment to a reference point before controlled cutting is carried out.

EP 0 230 710 A1

./...

FIG. 1

## ALIGNMENT METHOD AND APPARATUS FOR FLUID JET CUTTING SYSTEM, AND A CUTTING SYSTEM

This invention relates to an alignment method and apparatus for a fluid jet cutting system, and a cutting system.

Cutting by means of a high velocity fluid jet is well known in the art. Typically, a fluid such as water is compressed to a pressure of 55,000 lbs per sq. inch ($40 \times 10^6$ kgm$^{-2}$) and forced through a jewel nozzle having a diameter of 0.003" (0.075 mm) to 0.030" (0.75 mm) generating an axially-directed jet having a velocity of up to three times the speed of sound. The jet thus produced can be used to cut through a variety of metallic and non-metallic materials such as steel, aluminum, paper, rubber, plastics, and so forth.

The metallic/non-metallic workpiece is supported for impingement by the jet at an axially spaced distance from the nozzle: typically, 0.10" (2.54 mm) to 2.50" (63.2 mm).

During the cutting operation, relative movement is provided between the workpiece and the nozzle. Typically, the nozzle is mounted to a "x-y" table for two-dimensional movement with respect to the workpiece. Naturally, means for moving the nozzle in a third dimension, towards or away from the workpiece, and/or a fourth dimension (i.e., rotationally) can be provided if desirable.

The movement of the cutting nozzle is frequently controlled by means of a microprocessor which moves the nozzle through a succession of coordinate-defined positions in accordance with programmed instruction. To ensure that cuts in the workpiece are accurately made, substantial attention is given to insuring that the workpiece is precisely positioned on the support means so that the programmed coordinates accurately locate the nozzle position with respect to the workpiece. By way of example only, the support means commonly includes tooling fixtures to accurately position the workpiece on the support means. For example, the tooling fixtures may include a plurality of locating pins which fit within mating holes of the workpiece. Alternatively, the tooling may provide holes which mate with pins or other extending members of the workpiece.

While the tooling fixtures may accurately position the workpiece on the support means, provision must also be made to minimize or eliminate the error between the actual and theoretical position of the cutting nozzle. The programmed coordinate values utilized by the microprocessor presume that the cutting nozzle has been initialized to a reference point prior to the start of the cutting operation. Accordingly, the accuracy of the nozzle's location is currently determined by actually cutting a piece of material, checking to determine whether the cut was made as intended, adjusting the position of the nozzle, and repeating the cutting process to verify the correction.

It is an object of the invention to provide an alignment system for such a nozzle which enables simple visual verification of alignment of the jet with a reference position.

The invention provides in one aspect a method for aligning the nozzle of a fluid jet cutting system with a reference position comprising the steps of:

positioning a target aperture at the reference position axially spaced from the fluid jet nozzle, the target aperture including an axially-extending portion having a slightly larger effective cross-section than the cross-section of the fluid jet;

generating a fluid jet through the nozzle; and

adjusting the relative positions of the fluid jet nozzle and target aperture for minimum disruption of the fluid jet as it passes through the axially-extending portion.

In another aspect, the invention provides, for use in a fluid jet cutting system comprising a nozzle for forming an axially directed jet of fluid, and support means for supporting a workpiece to be cut by the jet, and wherein the nozzle and the support means are relatively movable, an alignment device for positioning the fluid jet at a reference position, the device comprising:

means defining a target aperture having a slightly greater effective cross-section than the cross-section of the fluid jet; and

mounting means for axially spacing the aperture from the nozzle at the reference position.

The invention also provides a fluid jet cutting system comprising:

a nozzle for forming an axially directed jet of fluid;

support means for supporting a workpiece to be cut by the jet, the nozzle and the support means being relatively movable; and

an alignment device having means defining a target aperture with a slightly greater effective cross-section than the cross-section of the fluid jet, and being mounted with respect to the support means and axially spaced from the nozzle at the reference position.

Thus in accordance with one embodiment of the invention, a method for aligning the fluid jet with a reference position is disclosed wherein a target hole is positioned at a reference point axially-spaced from the fluid jet nozzle. The target hole includes at least an axially extending segment having a slightly larger effective cross-section than the cross-section of the fluid jet. A jet of fluid is then produced at less pressure than that required for cutting, and the relative positions of the fluid jet nozzle and target hole segment are adjusted for minimal disruption of the fluid jet as it passes through the hole segment.

In its simplest embodiment, the target hole may be a simple through hole formed in an alignment member and having an essentially constant diameter as measured from its axis. Alternatively, the target hole may be funnel-shaped with its sidewalls converging towards an axially-extending segment having a slightly larger effective cross-section than the cross-section of the fluid jet.

The term "effective cross-section" is used to denote the cross-sectional dimensions of the target hole in the plane normal to the fluid jet axis. In accordance with another embodiment of the invention, an alignment device is provided for positioning the fluid jet at a reference position comprising means defining a target gap having a slightly greater effective cross-section than the cross-section of the fluid jet, and mounting means for axially spacing the gap from the nozzle at the reference position.

In essence, the present inventor has discovered that the fluid jet from the nozzle will pass through an orifice only slightly larger in cross-section, without disruption of the jet, when the centres of the jet and orifice are aligned. Any misalignment between the centres is visually evident due to a substantial amount of spray created by the deflection of the jet from the material surrounding the target hole. Accordingly, visual verification of the jet's alignment to the reference point is easily accomplished.

The difference between the jet diameter and that of the target hole is preferably between 0.002" (.005 cm) and 0.010" (.025 cm), and in particular may be 0.004" (0.01 cm). In general, the alignment accuracy decreases with increasing hole diameter. The jet diameter may, typically be in the range of from 0.003" (0.008 cm) to 0.030" (.08 cm).

For a better understanding of the present invention, and to show how the same may be carried into effect, reference will now be made, by way of example, to the accompanying drawings, in which:-

Figure 1 is a perspective view of a fluid jet cutting system constructed in accordance with an embodiment of the invention;

Figure 2 is an enlarged fragmentary side elevation view, in section, taken along line 2-2 in Figure 1 and showing an alignment device;

Figure 3A is a perspective view of an alternative embodiment of the invention;

Figure 3B is an enlarged fragmentary view in perspective of the encircled portion of Figure 3A; and

Figure 4 illustrates another embodiment of the invention.

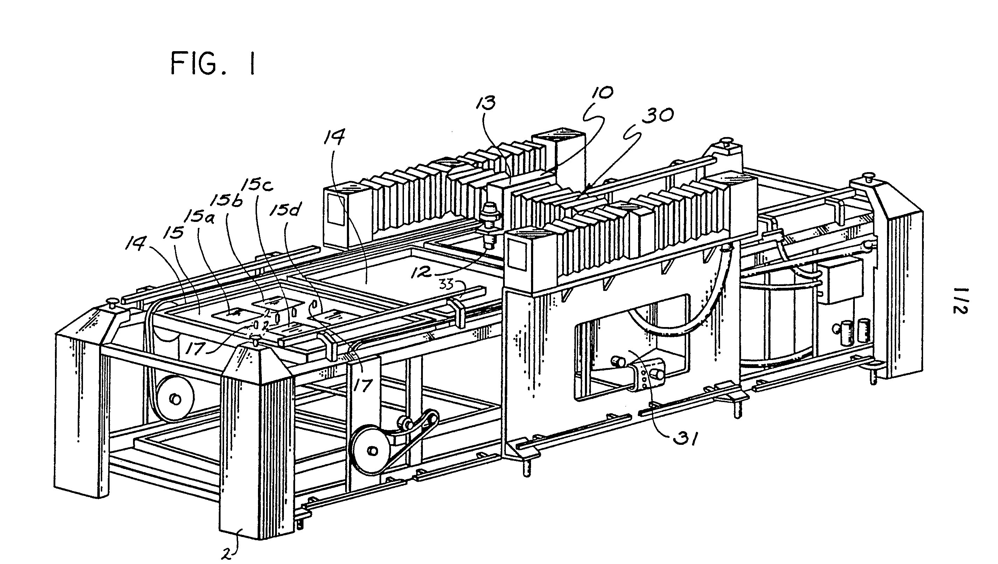

Figure 1 is a perspective view of a fluid jet cutting system utilizing the alignment device described herein. The cutting system comprises a cutting head 10 mounted for movement in two dimensions on an x-y table 30. The cutting head 10 includes a high pressure fluid nozzle 12 in fluid communication with a high pressure intensifier 13. Pressure intensifiers are well known in the art; one such intensifier is the subject of U.S. Patent 3,811,795 assigned to the assignee of this invention, the contents of which are hereby incorporated by reference.

The nozzle 12 forms a high velocity jet of fluid, such as water, having a diameter of approximately 0.003" (0.076 mm) to 0.014" (0.356 mm) and a speed of approximately 3,000 fps ($914ms^{-1}$). The fluid jet is the medium which cuts a workpiece lying below the nozzle. In Figure 1, the intended workpiece is a masterboard of printed circuit board material.

The masterboard is supported approximately 0.10" (2.54 mm) to 2.50" (63.5 mm) below the nozzle on a generally flat, rectangular platten 14. A plurality of such plattens 14 are, in turn, supported by the frame 2.

Each platten 14 supports a tooling plate 15, illustrated only on the left-most platten 14 in Figure 1.

The tooling plate 15 has four apertures 15a-d through which the top surface of the platan is exposed. The four apertures define the cutting areas over which four masterboards are respectively placed utilizing axially-extending index pins 17 in a manner known in the art.

In Figure 1, two pairs of index pins 17 are illustrated adjacent apertures 15a, 15b respectively. Two additional pairs of index pins are similarly adjacent apertures 15d, 15c but are hidden from view by a side rail 33. The pins 17 fit tightly within precisely located holes in the masterboards.

Although only one nozzle 12 is illustrated in Figure 1 for visual clarity, those skilled in the art will recognize that the illustrated tooling arrangement is frequently used in conjunction with four simultaneously moved cutting heads. In such multiple nozzle arrangements, the nozzles are capable of independent movement for alignment purposes, and are thereafter moved together to cut the four masterboards simultaneously.

A catcher 31 is positioned below the illustrated nozzle 12 on the opposite side of the platans 14. Catchers are generally open-topped vessels which catch spent cutting fluid and kerf material and which dissipate remaining kinetic energy of the fluid jet.

During a cutting operation, a masterboard is placed on the tooling fixture 15 associated with a platan at one end of the illustrated conveyor system. The masterboard is subsequently transported to a position underlying the nozzle 12 by conveyor means under microprocessor control. Details concerning the conveyor means are beyond the scope of this application and, for the sake of brevity, are not described in detail.

Once the masterboard has been transported to a position underlying the nozzle 12, the nozzle is activated by the microprocessor to produce the cutting jet. The x-y table 10 is responsive to microprocessor control to move the nozzle in the direction of platan travel, as well as transversely thereto, to make one or more cuts in the masterboard.

The cutting path(s) of the fluid jet is defined by data read by the microprocessor. The data is, in essence, information concerning the coordinates intersected by the cutting path on an imaginary grid superimposed on the cutting board. The coordinate system may utilize Cartesian coordinates, polar coordinates, or the like. Accordingly, any arbitrary path may be followed by simply defining the coordinates of the path.

While the index pins 17 accurately locate the workpiece with respect to the superimposed coordinate system, care should be taken to insure that the actual coordinates of the nozzle's position are as close as possible to the programmed coordinates. Such accuracy is particularly necessary when the masterboard is densely populated with electronic components.

When electronic printed wiring boards are mass produced, it is preferable to perform as many operations as possible on a masterboard prior to cutting the masterboard into individual printed wiring boards. Accordingly, it is desirable to insert and solder electronic components, and perform all cleaning operations on the board, prior to the cutting of the masterboard. The density of electronic components on printed wiring boards is increasing dramatically. To avoid damage to electronic components during the cutting operation, the actual and programmed coordinate values must be as close as possible.

Once the cutting of the masterboard has been completed, the nozzle 12 is deactivated by the microprocessor and the platan bearing the cut masterboard is transported to the next station under microprocessor control. The cutting process is then repeated on the next masterboard.

Those skilled in the art will recognize that multiple cutting nozzles may be mounted on the x-y table and may be coupled to the illustrated nozzle 12 for movement therewith. in one or both directions. Alternatively, the additional cutting nozzle(s) can be operated independently in one or both directions.

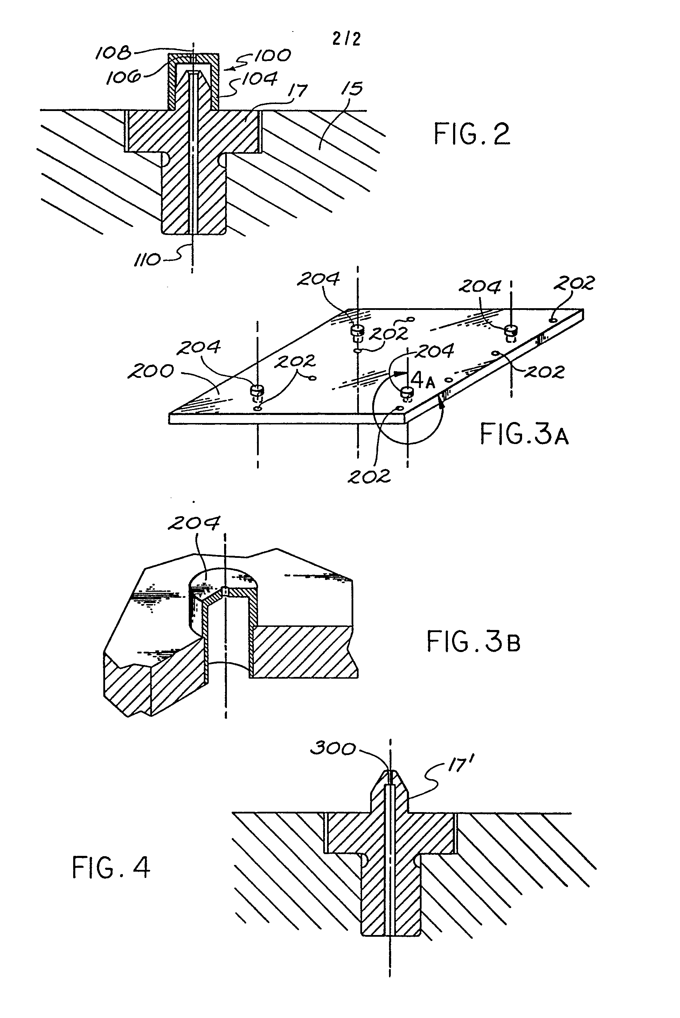

In order to provide precise correlation between the nozzle's position and the desired position, the instant invention provides a means for initializing the nozzle position at a reference point prior to the cutting operation. Turning to Figure 2, a fragmentary side elevation view in section of one the illustrated indexing pins 17 is illustrated. The pin 17 is a generally tubular body, the upper end of which is inwardly tapered. The bottom portion of the pin 17 is securely received within the tooling plate 15, as is known in the art.

An alignment device 100 constructed in accordance with the invention comprises a generally cylindrical body 104 having an internal diameter dimensioned to slightably engage a preselected pin 17 of the tooling fixture 15. The body 104 extends axially towards the nozzle 12. The end of the body closest to the nozzle is closed-ended except for a target gap in the form of a through hole 106 positioned axially between the nozzle 12 and pin 17.

The axis of the target hole 106 defines a reference position to which the nozzle 12 is initialized by coaxially aligning the axis of the fluid jet with the axis of the target hole. The axis 108 of the target hole 106 is illustrated as being aligned with the axis 110 of the pin, although those skilled in the art will understand that this is not necessary.

The target hole is dimensioned to be 0.004" (0.1 mm) larger in diameter than the fluid jet. When coaxially aligned with the target hole, the jet passes through without disruption. If the jet is not axially aligned, a large amount of spray is created by deflection of the jet off the top surface of the illustrated alignment member.

The alignment member 100 is formed from a 0.5" (12.7mm) diameter series 300 stainless steel cylinder which is 0.5" (12.7mm) long. The hole is drilled concentric to the outside diameter of the cylinder and counterboard to fit over the pin 17. The fluid jet is 0.10" (2.54mm) in diameter and the tooling pin is 0.249" (6.32mm) in diameter.

In operation, the cap is placed on the tooling pin and the nozzle is activated, preferably at a pressure below that required to cut. The position of the nozzle is adjusted either manually or by means of microprocessor control, until the jet passes through the target hole 106 with minimal or no spray. After passing through the target hole, the jet passes through the interior passageway of the tubular pin, and into the catcher 31 (Figure 1) The cap is then removed and the cutting operation commenced.

Figures 3A and 3B illustrate a second embodiment of the invention which is particularly suitable when the index pins 17 are non-tubular. A generally planar alignment plate 200 is formed from an aluminium jig plate. The alignment plate 200 has a plurality of through holes 202 sized to removably and firmly receive the indexing pins 17 (Figure 1) on the tooling plate 15.

The illustrated alignment plate 200 further includes four alignment caps 204 fixedly positioned within respective bore holes. The caps 204 are positioned with respect to the pin-receiving through holes 202 to be located at a pair of reference co-ordinates for aligning a nozzle 12. The illustrated plate 200, having four caps 204, is suitable for aligning a four-nozzle cutting system.

The caps 204 are formed from flame hardened steel and are similar to the alignment member 100 shown in Figure 2.

Figure 4 is an enlarged sectional view of another embodiment of the invention wherein the index pin itself is provided with a target hole. The top portion of the pin 17' has a target passageway 300 dimensioned in accordance with the earlier description of the target hole. The remaining portion of the pin is tubular, having an internal diameter that is larger than the diameter of the target passageway.

While the foregoing description includes detail which will enable those skilled in the art to practice the invention, it should be recognized that the description is illustrative and that many modifications and variations will be apparent to those skilled in the art having the benefit of these teachings. For example, the cap may be dimensioned to fit within a hole formed in the tooling fixture. Additionally, alignment caps with various sized orifices can be used to perform initial course adjustments and sequentially finer adjustments, ultimately bringing the jet into final alignment with the slightly larger diameter hole illustrated herein.

It is accordingly intended that the invention herein be defined solely by the claims appended hereto and that the claims be interpreted as broadly as permitted in light of the prior art.

CLAIMS:

1.    A method, for aligning the nozzle of a fluid jet cutting system with a reference position, comprising the steps of:

positioning a target aperture (106) at the reference position axially spaced from the fluid jet nozzle (12), the target aperture including an axially-extending portion having a slightly larger effective cross-section than the cross-section of the fluid jet;

generating a fluid jet through the nozzle; and

adjusting the relative positions of the fluid jet nozzle and target aperture for minimum disruption of the fluid jet as it passes through the axially extending portion.

2.    A method according to claim 1, in which the fluid jet is generated at a pressure which is less than the pressure that causes cutting.

3.    A method according to claim 1 or 2, including the step of removably mounting a target aperture providing member with respect to a cutting table (14) prior to the adjusting step.

4.    A method according to claim 3, including the additional step of removing the aperture providing member from the table subsequent to the adjusting step and prior to a cutting operation.

5.    For use in a fluid jet cutting system comprising a nozzle (12) for forming an axially directed jet of fluid and support means (15) for supporting a workpiece to be cut by the jet, and wherein the nozzle and the support means are relatively movable, an alignment device for positioning the fluid jet at a reference position, the device comprising:

means (104) defining a target aperture (106) having a slightly greater effective cross-section than the cross-section of the fluid jet; and

mounting means for axially spacing the aperture from the nozzle at the reference position.

6. An alignment device according to claim 5, comprising a generally tubular body (104) constituting said mounting means and having one end dimensioned to slideably engage a pin-member (17) of the support means (15) and the other end generally closed but for a through hole (106) defining the target aperture and having a slightly greater cross-section than the cross-section of the fluid jet.

7. A fluid jet cutting system comprising:

a nozzle (12) for forming an axially directed jet of fluid;

support means (15) for supporting a workpiece to be cut by the jet, the nozzle and the support means being relatively movable; and

an alignment device (104) having means defining a target aperture with a slightly greater effective cross-section than the cross-section of the fluid jet, and being mounted with respect to the support means and axially spaced from the nozzle at the reference position.

8. A system according to claim 7, wherein the support means includes workpiece-positioning pin members (17) adapted to fit within corresponding holes formed in a workpiece for accurate positioning of the workpiece on the support means, and wherein the device includes means (104) for mounting a target aperture defining surface on the workpiece-positioning pin member so that the aperture is axially positioned between the nozzle and pin member.

9. A system according to claim 7, wherein the support means includes a member (200) having an accurately positioned locating hole and wherein the device includes means for mounting a target aperture defining member (204) within the locating hole.

FIG. 1

FIG. 2

FIG. 3A

FIG. 3B

FIG. 4

**European Patent Office**

**EUROPEAN SEARCH REPORT**

| Category | Citation of document with indication. where appropriate, of relevant passages | Relevant to claim | CLASSIFICATION OF THE APPLICATION (Int. Cl 4) |
|---|---|---|---|
| | **DOCUMENTS CONSIDERED TO BE RELEVANT** | | EP 86305544.8 |
| A | US - A - 4 204 448 (PEARL) <br> * Totality * <br> ---- | | B 26 F 3/00 |

**TECHNICAL FIELDS SEARCHED (Int Cl 4)**

B 26 F
B 26 D

The present search report has been drawn up for all claims

| Place of search | Date of completion of the search | Examiner |
|---|---|---|
| VIENNA | 25-02-1987 | HOFMANN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82